# FASCICULE DE BREVET EUROPEEN

(11) **EP 2 219 113 B1**
(45) Date de publication et mention de la délivrance du brevet: **27.11.2019**
(21) Numéro de dépôt: 10153337.0
(22) Date de dépôt: 11.02.2010
(51) Int. Cl.: G06F 11/36

(54) **Procédé d'affichage, dispositif et produit programme d'ordinateur correspondant**
Anzeigeverfahren sowie entsprechende Vorrichtung und entsprechendes Computerprogrammprodukt
Display method, corresponding device and computer program product

(30) Priorité: 11.02.2009 FR 0950863
(43) Date de publication de la demande: 18.08.2010
(73) Titulaire: Ingenico Group, 75015 Paris (FR)
(72) Inventeur: Naccache, David, 75018 PARIS (FR); Polechtchouk, Pavel, 75018 PARIS (FR)
(74) Mandataire: Vidon Brevets & Stratégie

(56) Documents cités:
- US-A- 5 642 511
- US-A1- 2005 172 264
- US-A1- 2005 204 344
- US-A1- 2005 246 656
- ANONYMOUS: "Siteground Dreamweaver Tutorial" , [Online] 2 février 2009 (2009-02-02), pages 1-27, XP002538353 Extrait de l'Internet: URL:http://www.scribd.com/doc/11576964/Sit eground-Dreamweaver-Tutorial> [extrait le 2009-07-22]

## Description

### 1 DOMAINE DE L'INVENTION

La présente invention se rapporte au domaine de la création d'applications informatiques.

La présente invention se rapporte plus particulièrement à la correction de telles applications informatiques lors d'opérations de tests fonctionnels ou unitaires ou encore lors d'opérations de maintenance corrective.

Le processus de création d'applications informatiques, telles que des applications de type applications « web » passe par de nombreuses étapes : la rédaction d'un cahier des charges, la rédaction de spécifications, de documents de test, la création de l'application en tant que telle ainsi que des phases de test et de correction applicative. Une fois toutes ces étapes réalisées, l'application est prête à être mise en production. Postérieurement à cette mise en production, des opérations de maintenance corrective peuvent avoir lieu.

Les étapes de test et de maintenance nécessitent de fréquentes mises à jour du code de l'application. Dans le cas d'une application de type « web » ces mises à jours sont rendues encore plus complexes du fait que bien souvent, une application de type « web » fait intervenir de nombreuses couches logicielles ; une couche d'accès à la base de données, une couche dite « métier » qui est chargée des fonctionnalités propres au métier en relation avec l'application et une couche de présentation qui est chargée de d'afficher les données à l'écran. D'autres couches peuvent encore intervenir et complexifier l'application.

### 2 SOLUTIONS DE L'ART ANTERIEUR

Il existe des solutions pour faciliter la correction des erreurs présentes dans les applications informatiques. Ces solutions sont la plupart du temps mises en œuvre au niveau des IDE (« Interface de développement »). De telles IDE se présentent la plupart du temps sous la forme d'un écran dans lequel il est possible de sélectionner des composants qui sont intégrés à l'application, ou directement du code source. La sélection de l'un ou l'autre de ces éléments de l'application conduit à l'apparition d'un ensemble de propriétés liées à l'élément sélectionné.

Par exemple, lorsque l'élément sélectionné est un composant d'accès à une base de données qui a été déposé sur une interface utilisateur d'une application à créer, les propriétés peuvent être : emplacement de la source de données, type de source de données, protocole d'accès à la source de données, etc.

Une telle approche par « composant » est notamment mise en ouvre dans les IDE de « CodeGear™ », comme par exemple « Delphi™ ». La sélection d'un composant entraîne l'apparition des propriétés de ce dernier dans un endroit spécifique de l'écran.

Dans le cadre du développement d'applications Web par exemple en Java, en PHP ou directement en HTML, l'IDE « Eclispe™ » est très fréquemment utilisée. Là encore, la sélection d'un morceau de code source (par exemple un objet en java) ou encore l'ouverture d'un fichier de code source provoque l'ouverture ou l'apparition d'une fenêtre contenant un ensemble de propriétés. Cette fenêtre est appelée « outline ».

D'autres implémentations de ce principe sont également visibles dans l'application « Dreamweaver™ » de « Adobe™ ». Lorsqu'un utilisateur sélectionne une partie ou un élément d'une page HTML en cours d'édition, l'éditeur (l'IDE) affiche dans une fenêtre des éléments représentant des propriétés associées à la balise qui est sélectionnée : par exemple si le texte sélectionné par l'utilisateur est encadré dans une balise <TD></TD>, représentant une case d'un tableau, les propriétés associées à cette balise seront affichées dans la fenêtre des propriétés de l'élément sélectionné : l'utilisateur peut alors modifier les valeurs des propriétés associées à cette balise : la couleur du fond de la case du tableau, l'alignement du texte dans la case, la couleur et la police de caractère du texte, les actions éventuelles à réaliser.

Bien souvent, l'utilisateur est confronté à un problème : dans l'exemple précédent, le texte étant entouré de la balise <TD></TD>, seules les propriétés de cette balise seront présentés dans la fenêtre de modification. Cependant, cette balise <TD></TD> est elle-même entourée d'une balise <TR></TR>, qui est elle-même entourée d'une balise <TABLE></TABLE>. Or dans le cas du langage HTML, comme dans le cas de beaucoup d'autres langages, il est possible que plusieurs propriétés d'autres éléments interfèrent sur l'élément sélectionné. Dans le cas précédent, si l'on considère la propriété « Backgroundcolor », cette propriété est modifiable dans chacune des balises <TD></TD>, <TR></TR> et <TABLE></TABLE>.

Ainsi, l'utilisateur qui sélectionne un texte situé entre les balises <TD></TD> et qui souhaite modifier la valeur de la propriété « Backgroundcolor » de rouge à bleu, doit, si la valeur de cette propriété n'est pas définie au niveau de la balise <TD></TD>, sélectionner successivement les balises <TR></TR> et <TABLE></TABLE> pour identifier la balise où la valeur de la propriété « Backgroundcolor » a été définie et pour modifier cette valeur.

Cet exemple, non limitatif mais très démonstratif et au demeurant assez simple, illustre les difficultés rencontrées par le développeur d'applications logicielles : les propriétés des éléments de code peuvent être très souvent définies dans de multiples endroits du code source de l'application ce qui ne facilite pas la maintenance ou la correction de l'application en question car cela oblige le développeur à naviguer dans de multiples portions de code source à la recherche de l'élément dont il souhaite modifier certaines des propriétés.

Le document XP002538353 concerne les services d'hébergement Dreamweaver, qui permettent aux utilisateurs de créer et de télécharger facilement des pages Web.

Le document US2005204344 A1 concerne une programmation orientée aspect (AOP), et en particulier, un système et un procédé d'analyse d'un programme et de sortie d'un résultat d'analyse de celui-ci.

### 3 RESUME DE L'INVENTION

L'invention ne présente pas ces inconvénients.

En effet, l'invention concerne un procédé de d'affichage de propriétés d'un élément d'un code source d'un programme informatique en cours d'édition.

Selon l'invention, un tel procédé comprend :
- une étape de création d'un arbre syntaxique de hiérarchisation dudit code source, comprenant pour chaque élément dudit code source, au moins un élément parent;
- une étape de mémorisation dudit arbre syntaxique;
- une étape de sélection, au sein dudit code source, dudit élément de code source ;
- une étape de recherche, au sein dudit code source, d'un ensemble d'éléments de code liés audit élément de code source sélectionné, lesdits éléments dudit ensemble comprenant des propriétés nommées, la dite étape de recherches comprenant une étape d'identification, au sein de l'arbre syntaxique mémorisé, dudit au moins un élément parent dudit élément sélectionné ;
- une étape de création d'une structure de données comprenant lesdites propriétés desdits éléments de code dudit ensemble d'éléments de code ;
- une étape de regroupement, au sein de ladite structure de données, desdites propriétés en fonction de leurs noms ;
- une étape d'affichage desdites propriétés regroupées au sein d'une portion d'un moyen d'affichage dudit code source.

Ainsi, en regroupant au sein d'une seule et même portion d'affichage (par exemple une fenêtre spécifique ou un pop up particulier) toutes les propriétés d'autres éléments pouvant être utilisées pour influer sur l'élément de code source préalablement sélectionné par l'utilisateur, l'invention facilite la correction et la maintenance du code source en question en évitant de nombreuses manipulations à l'utilisateur.

Selon un mode de réalisation particulier de l'invention, ledit procédé d'affichage comprend en outre, préalablement à ladite étape de regroupement, une étape de suppression, au sein de ladite structure de données, des propriétés ne pouvant pas être utilisées pour influer sur ledit élément de code source préalablement sélectionné par ledit utilisateur.

Ainsi, l'invention évite d'induire l'utilisateur en erreur en présentant, au sein de la portion d'affichage, des propriétés qui ne peuvent pas être utilisées pour influer sur l'élément sélectionné par l'utilisateur.

Selon une caractéristique particulière de l'invention, ledit procédé d'affichage comprend en outre, préalablement à ladite étape de regroupement, une étape de suppression, au sein de ladite structure de données, des propriétés ne comportant pas de valeurs.

Ainsi, seules les propriétés qui ont déjà été valuées (c'est-à-dire les propriétés qui ont déjà reçue une valeur) sont affichées. On évite ainsi d'afficher trop d'informations à l'utilisateur et on facilité la maintenance du programme informatique.

L'invention concerne également un système d'affichage de propriétés d'un élément d'un code source d'un programme informatique en cours d'édition.

Selon l'invention, un tel système comprend :
- des moyens de création d'un arbre syntaxique de hiérarchisation dudit code source, comprenant pour chaque élément dudit code source, au moins un élément parent;
- des moyens de mémorisation dudit arbre syntaxique;
- des moyens de sélection, au sein dudit code source, dudit élément de code source ;
- des moyens de recherche, au sein dudit code source, d'un ensemble d'éléments de code liés audit élément de code source sélectionné, comprenant des moyens d'identification, au sein dudit arbre syntaxique mémorisé, dudit au moin un élément parent dudit élément sélectionné;
- des moyens de création d'une structure de données comprenant des propriétés desdits éléments de code dudit ensemble d'éléments de code ;
- des moyens de regroupement, au sein de ladite structure de données,
   desdites propriétés en fonction de leurs noms, lesdits éléments dudit ensemble comprenant des propriétés nommées;
- des moyens d'affichage desdites propriétés regroupées au sein d'une portion d'un moyen d'affichage dudit code source.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé d'affichage tel que décrit précédemment.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente l'affichage produit par un navigateur web à partir d'un code HTML ;
- la figure 2 illustre une interface d'une application de développement logicielle au sein de laquelle, selon un mode de réalisation de l'invention, les propriétés des éléments sont affichées ;
- la figure 3 illustre un mode de réalisation du procédé de l'invention.

### 5 DESCRIPTION DETAILLEE DE L'INVENTION

### 5.1 Rappel du principe de l'invention

On précise que dans le cadre de la présente invention, un élément peut être toute partie de code, tel qu'un contrôle visuel ou un bloc de code source, qui est sélectionnable dans une interface homme machine d'une application de développement logicielle.

Dans au moins un mode de réalisation, l'invention comprend des moyens pour regrouper des propriétés qui sont associées à une portion de code sélectionnée par l'utilisateur (tel qu'un élément de code particulier). Une propriété est un Attribut nommé d'un objet, d'un contrôle ou d'un élément (appelé élément par la suite). Les propriétés définissent les caractéristiques de l'objet telles que la taille, la couleur, l'emplacement sur l'écran ou l'état d'un objet (activé ou désactivé, par exemple). Les propriétés sont typées : la taille est un type de propriété au même titre que la couleur, l'emplacement, la base de données auquel l'objet est connecté, etc. Les propriétés peuvent être vierges (elles ne comprennent pas de valeur) ou valuées (elles ont une valeur).

Par exemple, dans le cas de l'édition d'un fichier comprenant du code au format HTML, l'invention permet de grouper en un seul endroit, aisément accessible au développeur, les propriétés d'un même type portant sur un élément de code source sélectionné.

Ainsi, le développeur voit d'un seul coup d'oeil où est définie la valeur du code source qu'il souhaite modifier. Par exemple, la propriété « Backgroundcolor » qui est modifiable pour de nombreux éléments d'un code source HTML sera affichée en un seul et même endroit (dans une portion de fenêtre spécifique), autant de fois qu'il y a de balises susceptibles de pouvoir modifier cette propriété pour l'élément de code source sélectionné. La valeur de cette propriété peut par exemple être « black ».

Plus précisément, dans le cadre de l'exemple précédent, si l'élément de code source sélectionné par l'utilisateur est un texte à l'intérieur d'une balise <TD></TD>, au moins trois propriétés « Backgroundcolor » seront affichées dans la fenêtre ou la portion de fenêtre considérée : une propriété « Backgroundcolor » en lien avec chaque balise <TD></TD>, <TR></TR> et <TABLE></TABLE>.

Ainsi, l'utilisateur a rapidement accès aux propriétés sans devoir naviguer d'une balise ou d'un ensemble de balises à l'autre et peut aisément repérer la balise dans laquelle la valeur de la propriété qu'il souhaite modifier a été définie.

La correction ou la maintenance de l'application logicielle est ainsi grandement facilitée. L'invention va à contre courant des a priori de l'homme du métier. En effet, plutôt que de regrouper de manière rationnelle les propriétés par élément, l'invention permet de regrouper les propriétés par type, indépendamment des éléments auxquels ces propriétés appartiennent. Ce type de regroupement est très utile pour les opérations de correction ou de maintenance applicative et peut n'être mis en œuvre au sien d'une application logicielle de développement que lorsque le programme développé par l'utilisateur est en cours de maintenance par exemple.

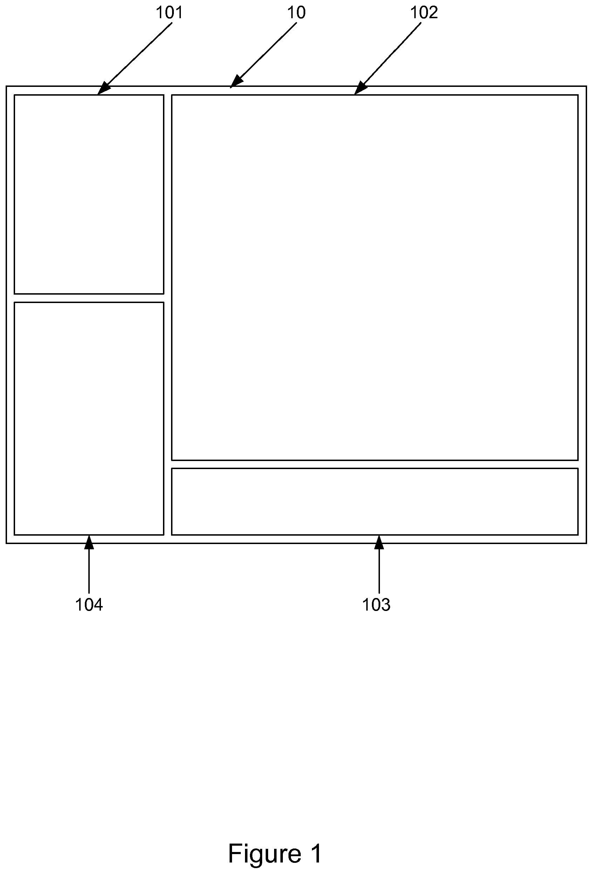

On présente, en relation avec la figure 1, une interface graphique classique (10) d'une application de développement d'applications logicielles. Une telle interface comprend une arborescence de fichiers (101), une fenêtre d'édition de code (102), une fenêtre de prévisualisation ou de présentation de résultats de compilation ou de recherche (103) et une fenêtre relative au code en cours d'édition (104). Cette dernière fenêtre (104) peut comprendre des propriétés liées à l'objet ou l'élément en cours d'édition.

Les exemples précédents n'ont été présentés qu'à titre purement illustratifs. L'invention n'en se limite nullement à cet exemple particulier. En effet, le procédé de l'invention peut également être mis en œuvre dans la cadre de nombreux types d'applications logicielles de développement telles que les applications « Eclipse™ », « Dreamweaver™ », « Delphi™ » et pour de nombreux autres langages de développement d'applications logicielles.

Par la suite, on présente notamment le cas d'un mode de réalisation de l'invention pour le code HTML.

### 5.2 Description d'un mode de réalisation

On présente dans ce mode de réalisation, la mise en œuvre de l'invention au langage à balises HTML. Le langage HTML est un langage qui permet de créer des pages qui sont affichées par un navigateur Web. Le langage HTML est un langage à balises car il comprend des instructions qui influent sur le moteur de rendu de pages HTML du navigateur Web et que ces instructions se présentent sous la forme de balises entourant les éléments définis dans la page HTML.

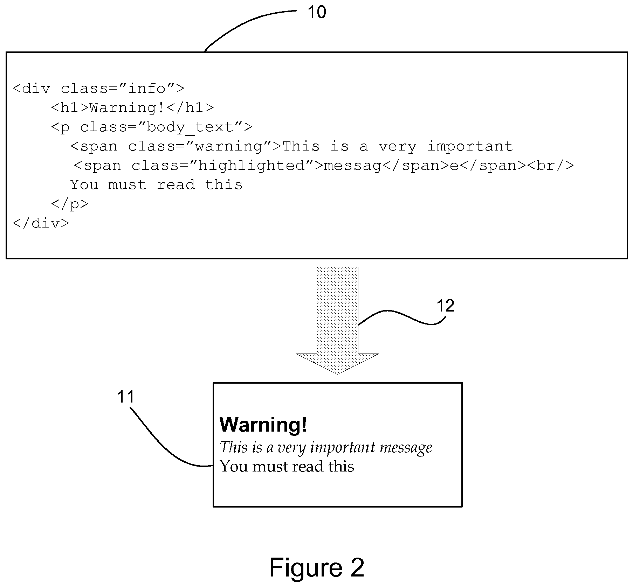

On présente, en relation avec la figure 2, une portion de code HTML (10) et le résultat (11) de l'interprétation (12) de ce code HTML par un navigateur Web, c'est-à-dire l'affichage correspondant.

Le code HTML comprend de nombreuses balises comme par exemple les balises <H1>, <P> et <SPAN>.

Ces balises servent à indiquer au navigateur web la manière dont il doit afficher le contenu de la page. L'utilisation du langage HTML s'accompagne presque systématiquement de l'utilisation de feuilles de styles (appelées en Anglais « CSS » pour « Cascading Style Sheets »).

Ces feuilles de style (et le langage informatique qui est utilisé pour construire ces feuilles de style) servent à décrire la présentation des documents HTML et XML. L'avantage des feuilles de style est de pouvoir théoriquement regrouper au sein d'un seul fichier (la feuille de style) tous les choix de présentation et de décoration des éléments HTML qui composent la page. Elles contiennent donc elles aussi des propriétés liées aux éléments de code HTML. Les feuilles de style sont également utilisées lors de la conversion de fichiers au format XML pour générer du code HTML.

A l'usage cependant, les inventeurs se sont rendus compte que les feuilles de style sont rarement utilisées de bout en bout du développement d'une application Web délivrant du code HTML au navigateur.

En effet, l'utilisation d'une feuille de style est relativement souvent utilisée lors de la création de l'application : partant de bonnes intentions, les développeurs sont assez enclins à séparer de manière efficace la présentation (les feuilles de style) et les données. Lors de la maintenance ou de la correction du code, en revanche, l'utilisation des feuilles de style est moins fréquente : il arrive fréquemment que la personne qui a créé l'application ne soit pas la même que celle qui en réalise la maintenance corrective et qu'une certaine connaissance de l'application ait disparue avec ce changement.

Dans ce mode de réalisation de l'invention, on propose donc de regrouper les propriétés d'un même type, y inclus les propriétés en provenance d'une feuille de style, au niveau d'une même portion d'écran ou une même fenêtre dans l'écran. Ce regroupement est réalisé lorsqu'un élément, ou une portion d'élément est sélectionnée par l'utilisateur. Cette sélection peut être réalisée directement dans le code source ou encore dans un mode de présentation dit « WYSIWYG » (de l'anglais pour « What You See Is What You Get »).

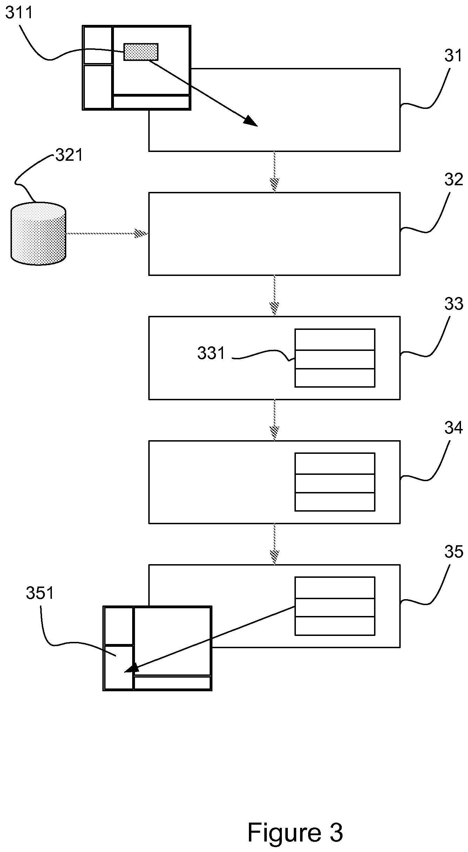

On présente, en relation avec la figure 3, les étapes générales du procédé de l'invention. Il comprend :
- une étape de création d'un arbre syntaxique de hiérarchisation dudit code source, comprenant pour chaque élément dudit code source, au moins un élément parent;
- une étape de mémorisation dudit arbre syntaxique;
- une étape de sélection (31), au sein du code source, de l'élément de code source 311. Cette sélection est opérée par l'utilisateur.
- une étape de recherche (32), au sein du code source 321, d'un ensemble d'éléments de code liés audit élément de code source sélectionné, lesdits éléments dudit ensemble comprenant des propriétés nommées, ladite étape de recherche comprenant une étape d'identification, au sein dudit arbre syntaxique mémorisé, dudit au moins un élément parent dudit élément sélectionné ;
- une étape de création (33) d'une structure de données 331 comprenant des propriétés des éléments de code de l'ensemble d'éléments de code ;
- une étape de regroupement (34), au sein de ladite structure de données, desdites propriétés en fonction de leurs noms ;
- une étape d'affichage (35) desdites propriétés regroupées au sein d'une portion d'un moyen d'affichage du code source 351.

Dans une première variante de ce mode de réalisation de l'invention, la sélection d'un élément ou d'une portion d'élément conduit dans un premier temps à l'affichage, sous la forme d'une liste, des éléments qui influent sur les propriétés de l'élément sélectionné. A la suite de cet affichage l'utilisateur est à même de sélectionner, dans la liste, l'élément qui l'intéresse. Dans un deuxième temps, les propriétés de l'élément sélectionné sont par exemple affichées, avec la possibilité pour l'utilisateur de revenir en arrière, c'est-à-dire à la liste des éléments.

Dans une deuxième variante de ce mode de réalisation de l'invention, la sélection d'un élément ou d'une portion d'élément conduit à l'élaboration d'une liste de propriétés, qui sont affichées. Cette liste regroupe les propriétés par type : il est ainsi possible d'avoir plusieurs fois la même propriété à la suite dans cette liste. La provenance de la propriété (l'élément connexe auquel elle appartient) est indiquée par un moyen idoine, tel qu'une icône, une bulle d'information ou tout autre moyen, pour que l'utilisateur ne soit pas déconcerté ou perdu par cet affichage.

L'utilisateur a ainsi la possibilité de voir tout de suite, d'un coup d'oeil, quelle est la propriété qui doit être modifiée et il n'a pas besoin de sélectionner tour à tour tous les éléments connexes pour identifier celui dont la propriété doit être modifiée.

Selon une autre variante de ce mode de réalisation de l'invention, seules les propriétés effectivement utilisées sont affichées. Ainsi, postérieurement à l'élimination des propriétés qui n'influent pas sur l'élément sélectionné, le procédé de l'invention réalise une nouvelle sélection pour n'afficher que les propriétés qui sont valuées : ainsi, lorsqu'une seule propriété d'un seul élément est valuée, elle est la seule à être affichée. Lorsque plusieurs propriétés du même type sont valuées, ce sont les seules à être affichées.

De cette manière, l'utilisateur est sur de respecter les choix d'implémentation et de présentation qui ont été précédemment réalisés en ne modifiant pas une propriété à la place d'une autre.

Il est bien sur possible de passer du mode ou toutes les propriétés possibles sont affichées au mode ou seules les propriétés effectivement utilisées sont affichées, l'important étant qu'il s'agisse bien des propriété des éléments connexes.

### 5.3 Gestion du code source

Au niveau du code source en tant que tel, l'invention découpe celui-ci sous la forme d'un arbre syntaxique. L'arbre est stocké en mémoire lors de l'édition du code source. Pour identifier les éléments qui influent sur un élément sélectionné par l'utilisateur (les éléments connexes), l'invention propose une méthode simple et rapide : les éléments qui influent sur l'élément sélectionnés sont les parents, dans l'arbre, de l'élément sélectionné.

Ainsi, en reprenant l'exemple des balises <TD></TD>, <TR></TR> et <TABLE></TABLE>, le père de l'élément <TD></TD> est l'élément <TR></TR> et le père de l'élément <TR></TR> est l'élément <TABLE></TABLE>. Les éventuels styles associés à des feuilles de style dans les éléments successivement pris en compte sont également affichés.

Selon une autre variante de ce mode de réalisation, seules les propriétés qui peuvent réellement influencer l'élément ou la portion d'élément sélectionné sont affichées. Ainsi, les propriétés qui n'ont pas d'impact sur l'élément sélectionné ne sont pas affichées, pour ne pas encombrer la liste avec des propriétés inutiles.

Pour réaliser cette sélection de propriétés, plusieurs méthodes sont possibles parmi lesquelles :
- l'utilisation d'un critère de similarité : seules les propriétés des éléments connexes qui portent le même nom, ou un nom similaire à celles de l'élément sélectionné sont affichées (par exemple « Color » ou « BackgroundColor ») ;
- l'utilisation d'une table de correspondance qui permet de définir un schéma d'influence comprenant des relations entre différentes propriétés de différents éléments.

Ce schéma d'influence est parcouru pour déterminer les propriétés à afficher en fonction de l'élément sélectionné. Ce schéma d'influence est déterminé à l'avance en fonction du langage. Il peut être représenté sous la forme d'une structure de données arborescente et/ou être implémenté dans une base de données.

## Revendications

1. Procédé d'affichage de propriétés d'un élément d'un code source d'un programme informatique en cours d'édition, ledit programme étant écrit dans un langage de type objet, un élément de code source prenant la forme d'un objet, procédé mis en œuvre au sein d'une application de développement d'applications logicielles, **caractérisé en ce qu'**il comprend :
- une étape de création d'un arbre syntaxique de hiérarchisation dudit code source, comprenant pour chaque élément dudit code source, au moins un élément parent ;
- une étape de mémorisation dudit arbre syntaxique ;
- une étape de sélection (31) au sein dudit code source, dudit élément de code source ;
- une étape de recherche (32), au sein dudit code source, d'un ensemble d'éléments de code liés audit élément de code source sélectionné, lesdits éléments dudit ensemble comprenant des propriétés nommées, ladite étape de recherche comprenant une étape d'identification, au sein dudit arbre syntaxique mémorisé, dudit au moins un élément parent dudit élément sélectionné ;
- une étape de création (33) d'une structure de données comprenant lesdites propriétés desdits éléments de code dudit ensemble d'éléments de code ;
- une étape de regroupement (34), au sein de ladite structure de données, desdites propriétés en fonction de leurs noms ;
- une étape d'affichage (35) desdites propriétés regroupées au sein d'une portion d'un moyen d'affichage dudit code source.

2. Procédé d'affichage selon la revendication 1, **caractérisé en ce qu'**il comprend en outre, préalablement à ladite étape de regroupement, une étape de suppression, au sein de ladite structure de données, des propriétés ne pouvant pas être utilisées pour influer sur ledit élément de code source préalablement sélectionné.

3. Procédé d'affichage selon la revendication 1, **caractérisé en ce qu'**il comprend en outre, préalablement à ladite étape de regroupement, une étape de suppression, au sein de ladite structure de données, des propriétés ne comportant pas de valeurs.

4. Système d'affichage de propriétés d'un élément d'un code source d'un programme informatique en cours d'édition, ledit programme étant écrit dans un langage de type objet, un élément de code source prenant la forme d'un objet, mis en œuvre au sein d'une application de développement d'applications logicielles, **caractérisé en ce qu'**il comprend :
- des moyens de création d'un arbre syntaxique de hiérarchisation dudit code source, comprenant pour chaque élément dudit code source, au moins un élément parent ;
- des moyens de mémorisation dudit arbre syntaxique ;
- des moyens de sélection, au sein dudit code source, dudit élément de code source ;
- des moyens de recherche, au sein dudit code source, d'un ensemble d'éléments de code liés audit élément de code source sélectionné, comprenant des moyens d'identification, au sein dudit arbre syntaxique mémorisé, dudit au moins un élément parent dudit élément sélectionné ;
- des moyens de création d'une structure de données comprenant des propriétés desdits éléments de code dudit ensemble d'éléments de code ;
- des moyens de regroupement, au sein de ladite structure de données, desdites propriétés en fonction de leurs noms, lesdits éléments dudit ensemble comprenant des propriétés nommées ;
- des moyens d'affichage desdites propriétés regroupées au sein d'une portion d'un moyen d'affichage dudit code source.

5. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé d'affichage selon l'une au moins des revendications 1 à 3, lorsqu'il est exécuté sur un ordinateur.

## Patentansprüche

1. Verfahren zum Anzeigen von Eigenschaften eines Elements eines Quellcodes eines Computerprogramms, das gerade bearbeitet wird, wobei das Programm in einer Objektsprache geschrieben wird, wobei ein Quellcodeelement die Form eines Objektes annimmt, Verfahren, das in einer Anwendung zur Entwicklung von Softwareanwendungen umgesetzt wird, **dadurch gekennzeichnet, dass** es aufweist:
- einen Schritt des Erstellens eines Syntaxbaums zum Hierarchisieren des Quellcodes, umfassend mindestens ein Elternelement für jedes Element des Quellcodes,
- einen Schritt des Speicherns des Syntaxbaums,
- einen Schritt des Auswählens (31) des Quellcodeelements in dem Quellcode,
- einen Schritt des Suchens (32) in dem Quellcode einer Anordnung von Codeelementen, die mit dem ausgewählten Quellcodeelement verbunden sind, wobei die Elemente der Anordnung genannte Eigenschaften aufweisen, wobei der Schritt des Suchens einen Schritt des Identifizierens des mindestens einen Elternelements des ausgewählten Elements in dem gespeicherten Syntaxbaum aufweist,
- einen Schritt des Erstellens (33) einer Datenstruktur, umfassend die Eigenschaften der Codeelemente der Anordnung von Codeelementen,
- einen Schritt des Zusammenfassens (34) der Eigenschaften innerhalb der Datenstruktur in Abhängigkeit von ihrem Namen,
- einen Schritt des Anzeigens (35) der Eigenschaften, die innerhalb eines Abschnitts eines Anzeigemittels des Quellcodes zusammengefasst werden.

2. Verfahren zum Anzeigen nach Anspruch 1, **dadurch gekennzeichnet, dass** es ferner vor dem Schritt des Zusammenfassens einen Schritt des Löschens innerhalb der Datenstruktur der Eigenschaften aufweist, die nicht verwendet werden können, um das zuvor ausgewählte Quellcodeelement zu beeinflussen.

3. Verfahren zum Anzeigen nach Anspruch 1, **dadurch gekennzeichnet, dass** es ferner vor dem Schritt des Zusammenfassens einen Schritt des Löschens innerhalb der Datenstruktur der Eigenschaften aufweist, die keine Werte aufweisen.

4. System zum Anzeigen von Eigenschaften eines Elements eines Quellcodes eines Computerprogramms, das gerade bearbeitet wird, wobei das Programm in einer Objektsprache geschrieben ist, wobei ein Quellcodeelement die Form eines Objektes annimmt, das in einer Anwendung zur Entwicklung von Softwareanwendungen eingesetzt wird, **dadurch gekennzeichnet, dass** es aufweist:
- Mittel zum Erstellen eines Syntaxbaums zum Hierarchisieren des Quellcodes, umfassend mindestens ein Elternelement für jedes Element des Quellcodes,
- Mittel zum Speichern des Syntaxbaums,
- Mittel zum Auswählen des Quellcodeelements in dem Quellcode,
- Mittel zum Suchen in dem Quellcode einer Anordnung von Codeelementen, die mit dem ausgewählten Quellcodeelement verbunden sind, umfassend Mittel zum Identifizieren des mindestens einen Elternelements des ausgewählten Elements in dem gespeicherten Syntaxbaum,
- Mittel zum Erstellen einer Datenstruktur, umfassend die Eigenschaften der Codeelemente der Anordnung von Codeelementen,
- Mittel zum Zusammenfassen der Eigenschaften innerhalb der Datenstruktur in Abhängigkeit von ihrem Namen, wobei die Elemente der Anordnung genannte Eigenschaften aufweisen,
- Mittel zum Anzeigen der Eigenschaften, die innerhalb eines Abschnitts eines Anzeigemittels des Quellcodes zusammengefasst sind.

5. Computerprogrammprodukt, das von einem Kommunikationsnetzwerk herunterladbar und/oder auf einem computerlesbaren Medium gespeichert und/oder von einem Mikroprozessor ausführbar ist, **dadurch gekennzeichnet, dass** es Programmcodebefehle für das Ausführen des Verfahrens zum Anzeigen nach mindestens einem der Ansprüche 1 bis 3 aufweist, wenn es auf einem Computer ausgeführt wird.

## Claims

1. Method for displaying the properties of a source code element of a computer program being edited, wherein said program is written in an object type, a source code element taking the form of an object, method implemented in a software development application, **characterised in that** it comprises:
- A step for creating a syntax hierarchisation tree of said source code, comprising, for each element of said source code, at least one parent element;
- a step for memorizing said syntax tree;
- A step for selecting (31), within said source code, said source code element;
- A step for searching (32), within said source code, a set of related code elements of said selected source code element, said elements of said set comprising named properties, said step for searching (32) comprising a step for identifying, within said memorized syntax tree of said at least one parent element of said selected element;
- A step for creating (33) a data structure comprising said properties of said code elements of said set of code elements;
- A step for grouping (34), within said data structure, said properties in function of their name;
- A step for displaying (35) said properties grouped within a portion of a means of displaying said source code.

2. Method for displaying according to claim 1, **characterised in that** it further comprises, prior to said grouping step, a step for deleting, within said data structure, properties which cannot be used to influence said source code element selected beforehand by said user.

3. Method for displaying according to claim 1, **characterised in that** it further comprises, prior to said grouping step, a step for deleting, within said data structure, properties which do not contain values.

4. System for displaying the properties of a source code element of a computer program being edited, wherein said program is written in an object type, a code element taking the form of an object, method implemented in a software development application, **characterised in that** it comprises:
- means of creating a syntax hierarchisation tree of said source code, comprising, for each element of said source code, at least one parent element;
- means of memorizing said syntax tree;
- means of selecting, within said source code, said source code element;
- means of searching, within said source code, a set of related code elements of said selected source code element, said elements of said set comprising named properties, said means of searching comprising means of identifying, within said memorized syntax tree of said at least one parent element of said selected element;
- means of creating a data structure comprising said properties of said code elements of said set of code elements;
- means of grouping, within said data structure, said properties in function of their name;
- means of displaying said properties grouped within a portion of a means of displaying said source code.

5. Computer program that may be downloaded from a communication network and/or stored on a support that may be read by a computer and/or executed by a microprocessor, **characterised in that** it comprises program code instructions for the execution of the display method according at least one of claims 1 to 3, when it is executed on a computer.
